# EUROPEAN PATENT SPECIFICATION

(11) **EP 4 191 711 B1**
(45) Date of publication and mention of the grant of the patent: **25.03.2026**
(21) Application number: 21898496.1
(22) Date of filing: 18.11.2021
(51) Int. Cl.: H01M 4/62, C01G 53/00, C01B 25/30, C01F 7/043, H01M 4/131, C01B 35/12, C01G 53/42, H01M 10/0525

(54) **ADDITIVE FOR POSITIVE ELECTRODE OF LITHIUM SECONDARY BATTERY, METHOD FOR MANUFACTURING SAME, AND LITHIUM SECONDARY BATTERY COMPRISING SAME**
ADDITIV FÜR POSITIVELEKTRODE EINER LITHIUMSEKUNDÄRBATTERIE, VERFAHREN ZUR HERSTELLUNG DAVON UND LITHIUMSEKUNDÄRBATTERIE DAMIT
ADDITIF POUR ÉLECTRODE POSITIVE DE BATTERIE SECONDAIRE AU LITHIUM, SON PROCÉDÉ DE FABRICATION ET BATTERIE SECONDAIRE AU LITHIUM LE COMPRENANT

(30) Priority: 26.11.2020 KR 20200161400; 15.11.2021 KR 20210156630
(43) Date of publication of application: 07.06.2023
(73) Proprietor: LG Energy Solution, Ltd., Seoul 07335 (KR)
(72) Inventor: JUNG, Hae Jung, Daejeon 34122 (KR); LEE, Boram, Daejeon 34122 (KR); YOO, Tae Gu, Daejeon 34122 (KR); JUNG, Wang Mo, Daejeon 34122 (KR); PARK, Byungchun, Daejeon 34122 (KR)
(74) Representative: Hoffmann Eitle
(86) International application number: PCT/KR2021/016974
(87) International publication number: WO 2022/114670

(56) References cited:
- JP-B2- 6 213 340
- KR-A- 20140 092 739
- KR-A- 20190 059 115
- KR-A- 20190 059 115
- KR-A- 20190 059 242
- KR-A- 20190 059 242
- KR-A- 20190 064 397
- KR-A- 20190 064 397
- KR-B1- 100 595 362
- S. KIRKLIN ET AL: "High-throughput screening of high-capacity electrodes for hybrid Li-ion-Li-O 2 cells", PHYSICAL CHEMISTRY CHEMICAL PHYSICS, vol. 16, no. 40, 1 January 2014 (2014-01-01), pages 22073 - 22082, XP055268463, ISSN: 1463-9076, DOI: 10.1039/C4CP03597F

## Description

### [Technical Field]

The present invention relates to an additive for a positive electrode of a lithium secondary battery, a method for preparing the same and a positive electrode of a lithium secondary battery including the same. In particular, the present invention relates to an additive for a positive electrode of a lithium secondary battery including an aluminum-doped lithium transition metal oxide, Li₃PO₄, Li₅AlO₄ and Li₃BO₃, a method for preparing the same, and a positive electrode of a lithium secondary battery including the same.

### [Background Art]

With increases in technology developments and demands for mobile devices, demands for secondary batteries as an energy source have rapidly increased. Among such secondary batteries, lithium secondary batteries having high energy density and voltage, a long cycle life, and a low self-discharge rate have been commercialized and widely used.

Lithium transition metal oxides are used as a positive electrode active material of a lithium secondary battery, and among these, lithium cobalt oxide of LiCoO₂ having a high operating voltage and excellent capacity properties has been mainly used. However, LiCoO₂ has very poor thermal properties since the crystal structure is destabilized due to delithiation and is also expensive, and therefore, has a limit to be used in large quantities as a power source in fields such as electric vehicles. As a material to replace LiCoO₂, lithium manganese oxide (LiMnO₂, LiMn₂O₄ or the like), a lithium iron phosphate compound (LiFePO₄ or the like), lithium nickel oxide (LiNiO₂ or the like) or the like has been developed. Among these, research and development has been actively conducted on lithium nickel oxide capable of readily obtaining large capacity batteries by having high reversible capacity of approximately 200 mAh/g.

In addition, as for a negative electrode active material, there have been increased demands for using a Si-based negative electrode active material for obtaining a high capacity lithium secondary battery, and since a Si-based negative electrode active material has large irreversible capacity, a balance needs to be made for irreversible capacity in a positive electrode as well in order to efficiently driving a battery. Accordingly, studies on a positive electrode additive having large irreversible capacity have also been conducted, and in this process, various additives such as Li₂NiO₂, Li₂CuO₄ and Li₆CoO₄ have been used as a positive electrode additive having large irreversible capacity.

Li₂NiO₂ is synthesized using a solid-phase method of Li₂O and NiO, and due to the low synthesis rate, Li₂O and NiO are basically left as unreacted substances. Such Li₂O and NiO are difficult to achieve capacity, and Li₂O may be converted into LiOH and Li₂CO₃ causing a problem of gelation during the electrode preparation process, and a problem of generating gas during charge and discharge and high temperature storage.

In order to resolve such problems, studies on a positive electrode additive for improving lithium secondary battery performance have been continuously conducted in the art.

Patent Document 2 describes an additive represented by {x(Li₂₊ₐNiₑM₁₋ₑO_{2+c})}·{y(NiO)}·{z(Li₂O)}·{wLi₅MO₄} wherein, M is one or more metal atoms forming a divalent cation or a trivalent cation, -0.2≤a≤0.2, 0.5≤b≤1.0, -0.2≤c≤0.2, 0.6≤x≤1.0, 0<y≤0.15, 0<z≤0.15, 0≤w≤0.1, x+y+z+w=1, provided that when b=1.0, 0<w≤0.1, and when w=0, 0.5≤b<1.0.

Patent Document 3 describes an additive comprising Li2Ni1-xMxO2 where M is a transition metal other than Ni, or an amphoteric element, P, F, or B, 0<x<1, and wherein the positive electrode additive further comprises less than 11 wt% NiO and 1 wt% or less Li₂O based on the total weight of the positive electrode additive, wherein a total amount of the NiO and the Li₂O is less than or equal to 11 wt% based on a total weight of the positive electrode additive.

Patent Document 4 describes an irreversible additive that comprises a lithium-excess transition metal oxide in a form of a secondary particle formed by aggregating a plurality of primary particles. A surface of the primary particles and a surface of the secondary particles are coated with at least one compound containing a metal element (M) and at least one compound containing boron (B), wherein M is selected from a group consisting of Al, Ti, Zr, and W.

Patent Document 5 describes a solid electrolyte that has a main body of an orthorhombic system crystal structure. The solid electrolyte is represented by LiₐGe_{b}P_{c}O₄ where 3.60≤a≤5.00, 0.80≤b+c≤0.95, and part of at least one of Ge and P may be substituted by at least one of Al, Si, V, Zn, As, Mo, and W.

Non-patent document 1 describes the use of density functional theory (DFT) within a high-throughput framework to screen for candidate materials possessing high capacity, voltages compatible with existing electrolytes, and reasonable electrical conductivity. Several candidate materials are reported, such as Li₆MnO₄, Li₆CoO₄, Li₄MoO₅ and Li₈IrO₆.

### [Prior Art Documents]

### [Patent Documents]

(Patent Document 1) Korean Patent Application Laid-Open Publication No. 10-2014-0092739
(Patent Document 2) KR 2019 0064397 A
(Patent Document 3) KR 2019 0059242 A
(Patent Document 4) KR 2019 0059115 A
(Patent Document 5) JP 6 213340 B2

### [Non-patent Document]

(Non-patent document 1) S. Kirklin et al., Physical Chemistry Chemical Physics, 2014, 16(40), pp. 22073-22082.

### [Disclosure]

### [Technical Problem]

The present invention provides an additive for a positive electrode of a lithium secondary battery capable of improving battery stability when used in a lithium secondary battery by including Li₃PO₄, Li₅AlO₄ and Li₃BO₃ together with a lithium transition metal oxide in which a portion of the transition metal is doped with aluminum, a method for preparing the same and a positive electrode of a lithium secondary battery including the same.

### [Technical Solution]

According to a first aspect of the present invention, there is provided an additive for a positive electrode of a lithium secondary battery, the additive including a lithium transition metal oxide having an aluminum-doped form and represented by Chemical Formula 1 described below, Li₃PO₄, Li₅AlO₄ and Li₃BO₃:

[Chemical Formula 1] Li₂Ni₁₋ₓAlₓO₂

wherein x is from 0.001 to 0.005.

According to a second aspect of the present invention, there is provided a method for preparing the additive for a positive electrode of a lithium secondary battery described above, the method including (1) preparing a mixture by mixing a transition metal source material, a lithium source material, a phosphorous source material, an aluminum source material and a boron source material; and (2) heat treating the mixture.

According to a third aspect of the present invention, there is provided a positive electrode of a lithium secondary battery, the positive electrode includes the additive of Claim 1 and a positive electrode active material, wherein the additive is included in 10 parts by weight to 40 parts by weight based on 100 parts by weight of the positive electrode active material.

### [Advantageous Effects]

An additive for a positive electrode of a lithium secondary battery according to the present invention includes a lithium transition metal oxide, Li₃PO₄, Li₅AlO₄ and Li₃BO₃, and the lithium transition metal oxide is doped with aluminum.

When the additive including Li₃PO₄, Li₅AlO₄ and Li₃BO₃ together with the lithium transition metal oxide is used in a positive electrode of a lithium secondary battery, a function of improving stability of the battery is obtained. Specifically, a general lithium transition metal oxide causes a side reaction with an electrolyte liquid when used in a positive electrode of a lithium secondary battery, which causes a problem of reducing stability such as generating gas in the battery, however, the Li₃PO₄, the Li₅AlO₄ and the Li₃BO₃ are mixed with the lithium transition metal oxide or some thereof form a coating layer, or a portion of aluminum is doped to the lithium transition metal oxide suppressing the lithium transition metal oxide from causing a side reaction with an electrolyte liquid.

### [Best Mode]

Embodiments provided according to the present invention may all be accomplished by the following descriptions.

When measurement conditions and methods are not specifically described for properties described in the present specification, the properties are measured using measurement conditions and methods generally used by those skilled in the art.

### Additive and Positive Electrode Active Material

The present invention provides an additive for a positive electrode of a lithium secondary battery including a lithium transition metal oxide, Li₃PO₄, Li₅AlO₄ and Li₃BO₃.

The aluminum-doped lithium transition metal oxide is represented by the following Chemical Formula 1.

[Chemical Formula 1] Li₂Ni₁₋ₓAlₓO₂

wherein x is from 0.001 to 0.005, specifically from 0.0015 to 0.004 and more specifically from 0.002 to 0.003.

In the present invention, Li₃PO₄, Li₅AlO₄ and Li₃BO₃ included together with the lithium transition metal oxide as the additive for a positive electrode of a lithium secondary battery are coated on the lithium transition metal oxide and are particularly effective in suppressing a side reaction with an electrolyte liquid, and therefore, a more superior effect of improving battery performance obtained from the addition of Li₃PO₄, Li₅AlO₄ and Li₃BO₃ may be expected when used with Li₂NiO₂ among the lithium transition metal oxides.

According to one embodiment of the present invention, the lithium transition metal oxide is included in 75% by weight to 90% by weight, preferably in 77% by weight to 87% by weight and more preferably in 80% by weight to 85% by weight based on a total weight of the additive. The lithium transition metal oxide is an additive performing a function of supplementing performance such as electrode capacity of a positive electrode active material, and a certain level or higher content is required to achieve performance of a lithium secondary battery, however, a problem in stability may occur, and a ratio with the additive materials of Li₃PO₄, Li₅AlO₄ and Li₃BO₃ needs to be properly adjusted. When the lithium transition metal oxide is included in less than 75% by weight based on a total weight of the additive, basic lithium secondary battery performance may decline, and when the lithium transition metal oxide is included in greater than 90% by weight based on a total weight of the additive, there may be a problem in overall stability of a positive electrode.

The additive according to the present invention includes Li₃PO₄ by adding a phosphorous source material and reacting with Li₂O or the like during the preparation process. The phosphorous source material will be specifically described in the following 'method for preparing additive'. The Li₃PO₄ improves stability of the lithium transition metal oxide, and particularly, is capable of suppressing gas generation in a battery caused by the lithium transition metal oxide reacting with an electrolyte liquid. In addition, including the phosphorous source material at a certain level or higher during the additive preparation process helps a portion of aluminum to be doped and positioned to the lithium transition metal oxide. According to one embodiment of the present invention, the Li₃PO₄ is included in 1% by weight to 10% by weight, preferably in 2% by weight to 8% by weight and more preferably in 3% by weight to 6% by weight based on a total weight of the additive. When the Li₃PO₄ is included in less than 1% by weight based on a total weight of the additive, the effect of improving stability of a lithium secondary battery may be insignificant, and the Li₃PO₄ being included in greater than 10% by weight based on a total weight of the additive is not preferred in terms of performance of a lithium secondary battery since the content of other components decreases.

The additive according to the present invention includes Li₅AlO₄ by adding an aluminum source material and reacting with Li₂O or the like during the preparation process. The aluminum source material will be specifically described in the following 'method for preparing additive'. A portion of aluminum supplied through the aluminum source material may be doped to the lithium transition metal. When doping with aluminum, the lithium transition metal oxide may be represented as in Chemical Formula 1. When aluminum is doped on a surface relating to the h index, Ni elution may be reduced while generating peak splitting. According to one embodiment of the present invention, the Li₅AlO₄ may be included in 0.5% by weight to 5% by weight, preferably in 1% by weight to 4% by weight and more preferably in 1.5% by weight to 3% by weight based on a total weight of the additive. When the Li₅AlO₄ is included in less than 0.5% by weight based on a total weight of the additive, the effect of improving stability of a lithium secondary battery may be insignificant, and the Li₅AlO₄ being included in greater than 5% by weight based on a total weight of the additive is not preferred in terms of performance of a lithium secondary battery since the content of other components decreases.

The additive according to the present invention includes Li₃BO₃ by adding a boron source material and reacting with Li₂O or the like during the preparation process. The boron source material will be specifically described in the following 'method for preparing additive'. According to one embodiment of the present invention, a portion of the Li₃BO₃ is present in a state of being coated on the lithium transition metal oxide. This is due to the nature of a boron atom. The Li₃BO₃ improves stability of the lithium transition metal oxide, and particularly, may suppress gas generation in a battery cause by the lithium transition metal oxide reacting with an electrolyte liquid. According to one embodiment of the present invention, the Li₃BO₃ is included in 0.1% by weight to 3% by weight, preferably in 0.3% by weight to 2% by weight and more preferably in 0.5% by weight to 1.5% by weight based on a total weight of the additive. The Li₃BO₃ is effective in improving stability of a lithium secondary battery even with a relatively small amount compared to other additive materials. When the Li₃BO₃ is included in less than 0.1% by weight based on a total weight of the additive, the effect of improving stability of a lithium secondary battery may be insignificant, and the Li₃BO₃ being included in greater than 3% by weight based on a total weight of the additive is not preferred in terms of performance of a lithium secondary battery since the content of other components decreases.

The additive materials of Li₃PO₄, Li₅AlO₄ and Li₃BO₃ included together with the lithium transition metal oxide are not effective in the stability of a lithium secondary battery when including one or two types of the materials in the same amounts or even in larger amounts compared to including three types of the materials at the same time. The three types of the additive materials each have individual functionality, and when used together, synergistic effects are obtained in the stability of a lithium secondary battery.

The additive according to the present invention may further include NiO in addition to the lithium transition metal oxide, the Li₃PO₄, the Li₅AlO₄ and the Li₃BO₃. The NiO is one of transition metal source materials added during the additive preparation process, and is a stable compound with low reactivity and may thereby be present in the additive in an unreacted state. Ni in the NiO may be replaced by materials such as Co, Cu, Mn and Fe depending on the type of the transition metal of the lithium transition metal oxide used in the additive. According to one embodiment of the present invention, the NiO may be included in 5% by weight to 15% by weight, preferably in 7% by weight to 13% by weight and more preferably in 8% by weight to 11% by weight based on a total weight of the additive.

The positive electrode active material functions as an actual positive electrode active material of exchanging electrons in a positive electrode of a lithium secondary battery, and materials generally used in the art may be used. Specifically, the positive electrode active material may be selected from among LiCoO₂, LiNiO₂, LiMnO₂, LiMn₂O₄, Li(NiₐCo_{b}Mn_{c})O₂ (0<a<1, 0<b<1, 0<c<1, a+b+c=1), LiNi_{1-y}Co_{y}O₂ (O<y<1), LiCo_{1-y}Mn_{y}O₂, LiNi_{1-y}Mn_{y}O₂(O<y<1), Li(NiₐCo_{b}Mn_{c})O₄ (0<a<2, 0<b<2, 0<c<2, a+b+c=2), LiMn_{2-z}Ni_{z}O₄ (0<z<2), LiMn_{2-z}Co_{z}O₄ (0<z<2) and combinations thereof. The additive performs a role of supplementing electrode capacity of the positive electrode active material, and therefore, a content thereof may be properly adjusted considering the relation with the positive electrode active material. According to one embodiment of the present invention, the additive may be included in 10 parts by weight to 40 parts by weight, preferably in 10 parts by weight to 30 parts by weight and more preferably in 10 parts by weight to 20 parts by weight based on 100 parts by weight of the positive electrode active material. Introducing the additive in the above-mentioned range is effective in improving performance of the positive electrode active material.

### Method for Preparing Additive

The present invention provides a method for preparing the additive for a positive electrode of a lithium secondary battery described above. The preparation method includes (1) preparing a mixture by mixing a transition metal source material, a lithium source material, a phosphorous source material, an aluminum source material and a boron source material; and (2) heat treating the mixture.

In the step (1), the transition metal source material is a material supplying a transition metal to the lithium transition metal oxide and the like included in the final positive electrode active material, and may generally be a transition metal oxide. According to one embodiment of the present invention, the transition metal source material is NiO. The lithium source material is a material supplying lithium to the lithium transition metal oxide, Li₃PO₄, Li₅AlO₄, Li₃BO₃ and the like included in the final additive, and may generally be a lithium oxide. According to one embodiment of the present invention, the lithium source material is Li₂O, LiOH or Li₂CO₃. The phosphorous source material is a material supplying phosphorous to Li₃PO₄ and the like included in the final additive, and may generally be ammonium phosphate. According to one embodiment of the present invention, the phosphorous source material is (NH₄)₂HPO₄. The aluminum source material is a material supplying aluminum to Li₅AlO₄ and the like included in the final additive, and may generally be aluminum hydroxide. According to one embodiment of the present invention, the aluminum source material is Al(OH)₃. The boron source material is a material supplying boron to Li₃BO₃ and the like included in the final additive, and may generally be boric acid. According to one embodiment of the present invention, the boron source material is B(OH)₃.

In the step (1), the transition metal source material, the lithium source material, the phosphorous source material, the aluminum source material and the boron source material may be introduced in proper amounts matching with the content of the components of the additive described above. According to one embodiment of the present invention, when mixing the source materials, the content of NiO and Li₂O may be adjusted so that the mole of Li₂O/mole of NiO is from 1.5 to 2.5, specifically from 1.7 to 2.3 and more specifically from 1.9 to 2.1, and the content of B(OH)₃ may be adjusted so that B is included in 500 ppm to 7,000 ppm, specifically in 750 ppm to 4,500 ppm and more specifically in 1,000 ppm to 2,000 ppm based on a total weight of the NiO and the Li₂O. According to one embodiment of the present invention, the content of Al(OH)₃ may be adjusted to be from 0.005 mol% to 0.05 mol%, specifically from 0.01 mol% to 0.04 mol% and more specifically from 0.01 mol% to 0.03 mol% based on a mole of the NiO, and the content of (NH₄)₂HPO₄ may be adjusted so that P is included in 1% by weight to 7% by weight, specifically in 1.5% by weight to 6% by weight and more specifically in 2% by weight to 5.5% by weight based on a total weight of the NiO and the Li₂O.

The mixture prepared in the step (1) is heat treated to prepare the additive. The heat treatment is enough as long as the mixture is baked to obtain the components of the additive described above, and according to one embodiment of the present invention, the mixture in the step (2) is heat treated for 10 hours to 32 hours, preferably for 10 hours to 26 hours and more preferably for 10 hours to 20 hours at 300°C to 700°C, preferably at 300°C to 600°C and more preferably at 300°C to 500°C.

### Lithium Secondary Battery

The present invention provides a lithium secondary battery including a positive electrode, a negative electrode, a separator, and an electrolyte. In the lithium secondary battery, the positive electrode and the negative electrode are placed to face each other, and the separator is provided between the positive electrode and the negative electrode. An electrode assembly of the positive electrode, the negative electrode, and the separator is stored in a battery container, and the battery container is filled with the electrolyte.

The positive electrode includes a positive electrode current collector, and a positive electrode active material layer formed on the positive electrode current collector and including the additive and the positive electrode active material described above.

In the positive electrode, the positive electrode current collector is not particularly limited as long as it has conductivity without inducing chemical changes to a battery, and for example, stainless steel, aluminum, nickel, titanium, baked carbon, or aluminum or stainless steel of which surface is treated with carbon, nickel, titanium, silver or the like, or the like, may be used. In addition, the positive electrode current collector may commonly have a thickness of 3 µm to 500 µm, and micro-unevenness may be formed on the positive electrode current collector surface to increase adhesive strength with the positive electrode active material. The positive electrode current collector may be used in various forms such as, for example, films, sheets, foil, nets, porous bodies, foams, and non-woven fabrics.

The positive electrode active material layer may include, together with the additive and the positive electrode active material described above, a conductor and a binder.

The conductor is used for providing conductivity to an electrode, and, in the formed battery, may be used without particular limit as long as it has electron conductivity without causing chemical changes. Specific examples thereof may include graphite such as natural graphite or artificial graphite; carbon-based materials such as carbon black, acetylene black, ketjen black, channel black, furnace black, lamp black, thermal black or carbon fiber; metal powders such as copper, nickel, aluminum or silver, or metal fibers; conductive whiskers such as zinc oxide or potassium titanate; conductive metal oxides such as titanium oxide; conductive polymers such as polyphenylene derivatives, or the like, and among these, one type alone or a mixture of two or more types may be used. The conductor may be commonly included in 1% by weight to 30% by weight with respect to a total weight of the positive electrode active material layer.

The binder performs a role of enhancing adhesion between particles of the positive electrode active material and adhesive strength between the positive electrode active material and the positive electrode current collector. Specific examples thereof may include polyvinylidene fluoride (PVDF), a vinylidene fluoride-hexafluoropropylene copolymer (PVDF-co-HFP), polyvinyl alcohol, polyacrylonitrile, carboxyl methyl cellulose (CMC), starch, hydroxypropyl cellulose, regenerated cellulose, polyvinyl pyrrolidone, tetrafluoroethylene, polyethylene, polypropylene, an ethylene-propylene-diene polymer (EPDM), a sulfonated-EPDM, styrene-butadiene rubber, fluorine rubber, various copolymers thereof, or the like, and among these, one type alone or a mixture of two or more types may be used. The binder may be included in 1% by weight to 30% by weight with respect to a total weight of the positive electrode active material layer.

The additive and the positive electrode active material may be included in 60% by weight to 95% by weight with respect to a total weight of the positive electrode active material layer.

The positive electrode may be prepared using a common positive electrode preparation method except that the additive and the positive electrode active material described above are used. Specifically, a composition for forming a positive electrode active material layer including the additive and the positive electrode active material described above, and, optionally, the binder and the conductor is coated on the positive electrode current collector, and then dried and rolled to prepare the positive electrode. Herein, each type and content of the additive, the positive electrode active material, the binder and the conductor are as described above.

As the solvent, solvents generally used in the art may be used, and examples thereof may include dimethyl sulfoxide (DMSO), isopropyl alcohol, N-methyl pyrrolidone (NMP), acetone, water or the like, and among these, one type alone or a mixture of two or more types may be used. The amount of the solvent used is sufficient as long as, considering the coating thickness of the slurry and the preparation yield, the additive, the positive electrode active material, the conductor and the binder are dissolved or dispersed, and viscosity is obtained enough to achieve excellent thickness uniformity when coating for preparing the positive electrode afterward.

As another method, the positive electrode may also be prepared by casting the composition for forming a positive electrode active material layer on a separate support, and laminating a film obtained by peeling from this support on the positive electrode current collector.

The negative electrode includes a negative electrode current collector, and a negative electrode active material layer disposed on the negative electrode current collector.

The negative electrode active material layer optionally includes a binder and a conductor together with the negative electrode active material.

As the negative electrode active material, compounds capable of reversibly intercalating or deintercalating lithium may be used. Specific examples thereof may include carbon materials such as artificial graphite, natural graphite, graphitized carbon fiber or amorphous carbon; metal compounds capable of alloying with lithium such as Si, Al, Sn, Pb, Zn, Bi, In, Mg, Ga, Cd, Si alloys, Sn alloys or Al alloys; metal oxides capable of doping and dedoping lithium such as SiO_{β} (0<β<2), SnO₂, vanadium oxides or lithium vanadium oxides; or composites including the metal compounds and the carbon materials such as Si-C composites or Sn-C composites, or the like, and among these, any one or a mixture of two or more may be used. In addition, a metal lithium thin film may also be used as the negative electrode active material. In addition, as the carbon material, low-crystalline carbon, high-crystalline carbon and the like may all be used. Representative examples of the low-crystalline carbon may include soft carbon and hard carbon, and representative examples of the high crystalline carbon may include high temperature baked carbon such as amorphous, plate-type, scaly, spherical or fibrous natural graphite or artificial graphite, Kish graphite, pyrolytic carbon, mesophase pitch based carbon fiber, meso-carbon microbeads, mesophase pitches and petroleum or coal tar pitch derived cokes.

The binder, the conductor and the negative electrode current collector may be selected with reference to the compositions in the positive electrode described above, but are not limited thereto. In addition, the method of forming the negative electrode active material layer on the negative electrode current collector may include known coating methods as in the positive electrode, and is not particularly limited.

In the lithium secondary battery, the separator separates the negative electrode and the positive electrode and provides a migration passage for lithium ions, and those commonly used as a separator in a lithium secondary battery may be used without particular limit, and those having an excellent electrolyte liquid moisture-containing ability while having low resistance for ion migration of the electrolyte are particularly preferred. Specifically, porous polymer films, for example, porous polymer films prepared with a polyolefin-based polymer such as an ethylene homopolymer, a propylene homopolymer, an ethylene/butene copolymer, an ethylene/hexene copolymer and an ethylene/methacrylate copolymer, or a laminated structure of two or more layers thereof may be used. In addition, common porous non-woven fabrics, for example, non-woven fabrics made of high melting point glass fiber, polyethylene terephthalate fiber and the like may also be used. In addition, a coated separator including a ceramic component or a polymer material may also be used in order to secure heat resistance or mechanical strength, and a single layer or multilayer structure may be selectively used.

As the electrolyte used in the present invention, organic-based liquid electrolytes, inorganic-based liquid electrolytes, solid polymer electrolytes, gel-type polymer electrolytes, solid inorganic electrolytes, molten inorganic electrolytes and the like that may be used when manufacturing a lithium secondary battery may be included, however, the electrolyte is not limited thereto.

Specifically, the electrolyte may include an organic solvent and a lithium salt.

The organic solvent may be used without particular limit as long as it is capable of performing a role of a medium through which ions involved in an electrochemical reaction of a battery migrate. Specifically, as the organic solvent, ester-based solvents such as methyl acetate, ethyl acetate, γ-butyrolactone or ε-caprolactone; ether-based solvents such as dibutyl ether or tetrahydrofuran; ketone-based solvents such as cyclohexanone; aromatic hydrocarbon-based solvents such as benzene or fluorobenzene; carbonate-based solvents such as dimethyl carbonate (DMC), diethyl carbonate (DEC), methylethyl carbonate (MEC), ethylmethyl carbonate (EMC), ethylene carbonate (EC) or propylene carbonate (PC); alcohol-based solvents such as ethyl alcohol or isopropyl alcohol; nitriles such as R-CN (R is a C2 to C20 linear, branched or cyclic-structured hydrocarbon group, and may include a double bond, an aromatic ring or ether bond); amides such as dimethylformamide; dioxolanes such as 1,3-dioxolane; sulfolanes, or the like may be used. Among these, carbonate-based solvents are preferred, and a mixture of a cyclic carbonate (for example, ethylene carbonate, propylene carbonate or the like) having high ion conductivity and high dielectric constant capable of enhancing charge and discharge performance of a battery and a low-viscosity linear carbonate-based compound (for example, ethylmethyl carbonate, dimethyl carbonate, diethyl carbonate or the like) is more preferred. In this case, performance of the electrolyte liquid is superior when mixing the cyclic carbonate and the linear carbonate in a volume ratio of approximately 1:1 to approximately 1:9.

The lithium salt is not particularly limited as long as it is a compound capable of providing lithium ions used in a lithium secondary battery. Specifically, as the lithium salt, LiN(FSO₂)₂, LiSCN, LiN(CN)₂, LiN(CF₃SO₂)₂, LiN(CF₃CF₂SO₂)₂, LiPF₆, LiF, LiCl, LiBr, LiI, LiNO₃, LiClO₄ LiAlO₄, LiAlCl₄, LiSbF₆, LiAsF₆, LiBF₂C₂O₄, LiBC₄O₈, Li(CF₃)₂PF₄, Li(CF₃)₃PF₃, Li(CF₃)₄PF₂, Li(CF₃)₅PF, Li(CF₃)₆P, LiCF₃SO₃, LiC₄F₉SO₃, LiCF₃CF₂SO₃, LiCF₃CF₂(CF₃)₂CO, Li(CF₃SO₂)₂CH, LiCF₃(CF₂)₇SO₃, LiCF₃CO₂, LiCH₃CO₂ and combinations thereof may be used. The concentration of the lithium salt is preferably in a range of 0.1 M to 2.0 M. When the lithium salt concentration is included in the above-mentioned range, the electrolyte has proper conductivity and viscosity leading to excellent electrolyte performance, and lithium ions may effectively migrate.

With the purpose of enhancing lifetime properties of a battery, suppressing a decrease in battery capacity, enhancing discharge capacity of a battery, and the like, the electrolyte may further include, in addition to the electrolyte components, one or more types of additives such as, for example, haloalkylenecarbonate-based compounds such as difluoroethylene carbonate, pyridine, triethylphosphite, triethanolamine, cyclic ether, ethylenediamine, n-glyme, hexaphosphoric acid triamide, nitrobenzene derivatives, sulfur, quinoneimine dyes, N-substituted oxazolidinone, N,N-substituted imidazolidine, ethylene glycol dialkyl ether, ammonium salts, pyrrole, 2-methoxyethanol or aluminum trichloride. Herein, the additive may be included in 0.1% by weight to 5% by weight with respect to a total weight of the electrolyte.

As described above, the lithium secondary battery including the positive electrode active material according to the present invention stably exhibits excellent discharge capacity, output properties and capacity retention rate, and therefore, is useful in the fields of mobile devices such as mobile phones, laptop computers and digital cameras, and electric vehicles such as hybrid electric vehicles (HEV).

Accordingly, another embodiment of the present invention provides a battery module including the lithium secondary battery as a unit cell, and a battery pack including the same.

The battery module or the battery pack may be used as a power supply for medium-to-large devices of any one or more of power tools; electric vehicles including electric vehicles (EV), hybrid electric vehicles and plug-in hybrid electric vehicles (PHEV); or electric storage systems.

### Example

### Example 1

NiO, Li₂O, B(OH)₃, Al(OH)₃ and (NH₄)₂HPO₄ were mixed, and the prepared mixture was heat treated for 10 hours at 300°C to prepare an additive. When mixing, a content of the NiO and a content of the Li₂O were adjusted so that a mole of the Li₂O/mole of the NiO is 2.03, and a content of the B(OH)₃ was adjusted so that B is included in 1,500 ppm based on a total weight of the NiO and the Li₂O. In addition, a content of the Al(OH)₃ was adjusted to be 0.03 mol% based on a mole of the NiO, and a content of the (NH₄)₂HPO₄ was adjusted so that P is included in 5.5% by weight based on a total weight of the NiO and the Li₂O.

### Comparative Example 1

Unlike Example 1, B(OH)₃ was not used, and NiO, Li₂O, Al(OH)₃ and (NH₄)₂HPO₄ were mixed and the prepared mixture was heat treated for 10 hours at 700°C to prepare an additive. When mixing, each content of the NiO, the Li₂O, the Al(OH)₃ and the (NH₄)₂HPO₄ was adjusted to be the same as in Example 1.

### Comparative Example 2

As an additive, a product including Li₂NiO₂ and Li₅AlO₄ (manufacturer: POSCO Chemical, product name: DN20) was prepared.

### Comparative Example 3

As an additive, a product including Li₂NiO₂ and Li₃PO₄ (manufacturer: POSCO Chemical, product name: DN40) was prepared.

### Experimental Example

### Experimental Example 1: Analysis on Components of Additive

The components of the additives of Example 1 and Comparative Examples 1 to 3 were analyzed by an X-ray diffraction analysis method using an X-ray diffractometer device (manufacturer: BRUKER NANO, product name: Bruker D8 Advance), and the results are shown in the following Table 1.

**[Table 1]**

| | Content (wt%) | | | | | |
|---|---|---|---|---|---|---|
| | Li₂Ni₁₋ₓAlₓO₂ (0.002≤x≤0.003) | NiO | Li₃PO₄ | Li₅AlO₄ | Li₃BO₃ | Ni |
| Example 1 | 83.0 | 8.7 | 4.1 | 2.6 | 1.1 | 0.5 |
| Comparative Example 1 | 86.4 | 8.1 | 2.9 | 2.2 | - | 0.4 |
| Comparative Example 2 | 90.4 | 7.2 | - | 2.4 | - | - |
| | Li₂NiO₂ | NiO | Li₃PO₄ | Li₅AlO₄ | Li₃BO₃ | Ni |
| Comparative Example 3 | 88.6 | 6.7 | 3.8 | - | - | 0.9 |

### Manufacture of Lithium Secondary Battery

A lithium secondary battery was manufactured in order to identify performance of the additives prepared according to Example 1 and Comparative Examples 1 to 3. Specifically, the additive of each of Example 1 and Comparative Examples 1 to 3 was mixed with LiNi_{0.83}Co_{0.11}Mn_{0.06}O₂, a positive electrode active material, in a weight ratio of 9:1 (positive electrode active material:additive), and mixed with a carbon black conductor and a PVDF binder in a weight ratio of 85:10:5 (additive+positive electrode active material:conductor:binder) in an N-methyl pyrrolidone solvent to prepare positive electrode active material slurry. This was coated on one surface of an aluminum current collector (20 µm) (loading amount: 0.2 mg to 0.3 mg/25 cm²), dried for 20 minutes or longer at 130°C, and then rolled once or twice so as to have porosity of 26% to prepare a positive electrode.

As a negative electrode, an electrode in which natural graphite and artificial graphite are mixed in 5:5 was used, and a porous polyethylene separator was provided between the positive electrode and the negative electrode to prepare an electrode assembly. After placing the electrode assembly inside a battery case, an electrolyte was injected into the case to manufacture a lithium secondary battery. Herein, the electrolyte liquid was prepared by dissolving a 0.7 M concentration of lithium hexafluorophosphoate (LiPF₆) and a 0.3 M concentration of lithium bis(fluorosulfonyl)imide (LiFSI) in an organic solvent formed with ethylene carbonate/ethylmethyl carbonate (mixed volume ratio of EC/EMC=3/7).

The manufactured lithium secondary battery was used for performance evaluation of Experimental Examples 2 and 3.

### Experimental Example 2: Analysis on Amount of Gas Generation Depending on Cycle of Lithium Secondary Battery

Each of the manufactured lithium secondary batteries was stored for 10 hours at 45°C, and then charged and discharged with 0.1 C (C-rate) in a 2.5 V to 4.2 V region for formation, and the amount of initially formed gas generation was measured in a state of charge (SOC) 0 state. After that, changes in the amount of gas generation at each of 10, 30 and 50 cycles were measured in volume with 0.33 C (C-rate) using the Archimedes principle. The measurement results are shown in the following Table 2.

**[Table 2]**

| | Amount of Gas Generation (mL/g) | | |
|---|---|---|---|
| | 10 Cycles | 30 Cycles | 50 Cycles |
| Example 1 | 2.06 | 3.32 | 4.29 |
| Comparative Example 1 | 1.06 | 3.20 | 4.31 |
| Comparative Example 2 | 2.92 | 4.97 | 6.76 |
| Comparative Example 3 | 0.41 | 2.82 | 4.67 |

According to Table 2, it was identified that, by a portion of the transition metal being doped with aluminum in the lithium transition metal oxide and by including Li₃PO₄, Li₅AlO₄ and Li₃BO₃ in the additive according to the present invention, the increase in the amount of gas generation gradually decreased as the cycle progressed. Such a decrease in the amount of gas generation may contribute to enhancing a long-term lifetime of a battery having 50 or more cycles progressed.

### Experimental Example 3: Analysis on Amount of Gas Storage of Lithium Secondary Battery

Each of the manufactured lithium secondary batteries was stored for 10 hours at 45°C, and then charged and discharged with 0.1 C (C-rate) in a 2.5 V to 4.2 V region to set at SOC 100, and while storing the battery for 4 weeks in a high temperature chamber of 60°C, changes in the amount of gas generation were measured every weak using the Archimedes principle. The measurement results are shown in the following Table 3.

**[Table 3]**

| | Amount of Gas Storage (mL/g) | | | |
|---|---|---|---|---|
| | Week 1 | Week 2 | Week 3 | Week 4 |
| Example 1 | 1.45 | 1.55 | 1.69 | 1.83 |
| Comparative Example 1 | 1.42 | 1.70 | 2.05 | 2.04 |
| Comparative Example 2 | 2.83 | 3.38 | 4.65 | 4.65 |
| Comparative Example 3 | 1.18 | 1.78 | 1.95 | 2.02 |

According to Table 3, it was identified that, by a portion of the transition metal being doped with aluminum in the lithium transition metal oxide and by including Li₃PO₄, Li₅AlO₄ and Li₃BO₃ in the additive according to the present invention, the amount gas generation was maintained low even after a certain period of time had passed. The additive according to the present invention has a small amount of gas generation with respect to the passage of time as well as the progress of the cycle, and therefore, may contribute to enhancing a long-term lifetime of a battery.

### Experimental Example 4: Analysis on Initial Charge and Discharge Capacity of Lithium Secondary Battery Depending on Content of Additive

For the lithium secondary battery using the additive of Example 1, the mixing weight ratio of the positive electrode active material and the additive was adjusted to each of 100:0, 90:10, 80:20 and 0:100 when manufacturing the lithium secondary battery. Each of the manufactured lithium secondary batteries was stored for 10 hours at 45°C, then charged and discharged with 0.1 C (C-rate) in a 2.5 V to 4.2 V region, and the initial charge capacity and discharge capacity were measured. The results are shown in the following Table 4.

**[Table 4]**

| Positive Electrode Active Material:Additive (Weight Ratio) | Initial Charge Capacity (mAh/g) | Initial Discharge Capacity (mAh/g) |
|---|---|---|
| 100:0 | 227.9 | 224.0 |
| 90:10 | 241.3 | 214.8 |
| 80:20 | 254.7 | 205.5 |
| 0:100 | 361.9 | 131.7 |

According to Table 4, the additive employing Li₂NiO₂ (state in which small amount of lithium is doped) prepared in Example 1 contains excess irreversible lithium, and it is identified that initial charge capacity using the irreversible lithium increases as the additive content increases. Particularly, the additive content being 90:10 or 80:20 may significantly increase initial charge capacity without significantly decreasing initial discharge capacity, and therefore, the additive may be used by efficiently combining with an irreversible negative electrode active material.

## Claims

1. An additive for a positive electrode of a lithium secondary battery, the additive comprising:
a lithium transition metal oxide having an aluminum-doped form and represented by Chemical Formula 1 below;
Li₃PO₄ ;
Li₅AlO₄; and
Li₃BO₃ ;
[Chemical Formula 1] Li₂Ni₁₋ₓAlₓO₂
wherein x is from 0.001 to 0.005.

2. The additive for a positive electrode of a lithium secondary battery of Claim 1,
wherein x is from 0.002 to 0.003.

3. The additive for a positive electrode of a lithium secondary battery of Claim 1, wherein the lithium transition metal oxide is included in 75% by weight to 90% by weight based on a total weight of the additive.

4. The additive for a positive electrode of a lithium secondary battery of Claim 1, wherein the Li₃PO₄ is included in 1% by weight to 10% by weight based on a total weight of the additive.

5. The additive for a positive electrode of a lithium secondary battery of Claim 1, wherein the Li₅AlO₄ is included in 0.5% by weight to 5% by weight based on a total weight of the additive.

6. The additive for a positive electrode of a lithium secondary battery of Claim 1, wherein the Li₃BO₃ is included in 0.1% by weight to 3% by weight based on a total weight of the additive.

7. The additive for a positive electrode of a lithium secondary battery of Claim 1, wherein a portion of the Li₃BO₃ is present in a state of being coated on the lithium transition metal oxide.

8. The additive for a positive electrode of a lithium secondary battery of Claim 1 wherein the additive further includes NiO.

9. The additive for a positive electrode of a lithium secondary battery of Claim 8, wherein the NiO is included in 5% by weight to 15% by weight based on a total weight of the additive.

10. A method for preparing the additive for a positive electrode of a lithium secondary battery of Claim 1, the method comprising:
(1) preparing a mixture by mixing a transition metal source material, a lithium source material, a phosphorous source material, an aluminum source material and a boron source material; and
(2) heat treating the mixture.

11. The method for preparing the additive for a positive electrode of a lithium secondary battery of Claim 10, wherein, in the step (1), the transition metal source material is NiO, the lithium source material is Li₂O, LiOH or Li₂CO₃, the phosphorous source material is (NH₄)₂HPO₄, the aluminum source material is Al(OH)₃ and the boron source material is B(OH)₃.

12. The method for preparing the additive for a positive electrode of a lithium secondary battery of Claim 10, wherein, in the step (2), the mixture is heat treated for 10 hours to 32 hours at 300°C to 700°C.

13. A positive electrode of a lithium secondary battery, the positive electrode comprising:
the additive of Claim 1; and
a positive electrode active material,
wherein the additive is included in 10 parts by weight to 40 parts by weight based on 100 parts by weight of the positive electrode active material.

## Patentansprüche

1. Additiv für eine positive Elektrode einer Lithium-Sekundärbatterie, wobei das Additiv folgendes umfasst:
ein Lithium-Übergangsmetalloxid in einer mit Aluminiumdotierten Form, dargestellt durch die folgende chemische Formel 1;
Li₃PO₄;
Li₃AlO₄; und
Li₃BO₃;
[Chemische Formel 1] Li₂Ni₁₋ₓAlₓO₂
worin x zwischen 0,001 und 0,005 liegt.

2. Additiv für eine positive Elektrode einer Lithium-Sekundärbatterie nach Anspruch 1,
wobei x zwischen 0,002 und 0,003 liegt.

3. Additiv für eine positive Elektrode einer Lithium-Sekundärbatterie nach Anspruch 1, wobei das Lithium-Übergangsmetalloxid in einer Menge von 75 Gew.-% bis 90 Gew.-%, bezogen auf das Gesamtgewicht des Additivs, enthalten ist.

4. Additiv für eine positive Elektrode einer Lithium-Sekundärbatterie nach Anspruch 1, wobei das Li₃PO₄ in einer Menge von 1 Gew.-% bis 10 Gew.-%, bezogen auf das Gesamtgewicht des Additivs, enthalten ist.

5. Additiv für eine positive Elektrode einer Lithium-Sekundärbatterie nach Anspruch 1, wobei das Li₅AlO₄ in einer Menge von 0,5 Gew.-% bis 5 Gew.-%, bezogen auf das Gesamtgewicht des Additivs, enthalten ist.

6. Additiv für eine positive Elektrode einer Lithium-Sekundärbatterie nach Anspruch 1, wobei das Li₃BO₃ in einer Menge von 0,1 Gew.-% bis 3 Gew.-%, bezogen auf das Gesamtgewicht des Additivs, enthalten ist.

7. Additiv für eine positive Elektrode einer Lithium-Sekundärbatterie nach Anspruch 1, wobei ein Teil des Li₃BO₃ in einem Zustand vorliegt, in dem es auf das Lithium-Übergangsmetalloxid als Beschichtung aufgebracht ist.

8. Additiv für eine positive Elektrode einer Lithium-Sekundärbatterie nach Anspruch 1, wobei das Additiv ferner NiO enthält.

9. Additiv für eine positive Elektrode einer Lithium-Sekundärbatterie nach Anspruch 8, wobei das NiO in einer Menge von 5 Gew.-% bis 15 Gew.-%, bezogen auf das Gesamtgewicht des Additivs, enthalten ist.

10. Verfahren zur Herstellung des Additivs für eine positive Elektrode einer Lithium-Sekundärbatterie nach Anspruch 1, wobei das Verfahren folgendes umfasst:
(1) Herstellen einer Mischung durch Mischen eines Übergangsmetall-Ausgangsmaterials, eines Lithium-Ausgangsmaterials, eines Phosphor-Ausgangsmaterials, eines Aluminium-Ausgangsmaterials und eines Bor-Ausgangsmaterials; und
(2) Wärmebehandeln der Mischung.

11. Verfahren zur Herstellung des Additivs für eine positive Elektrode einer Lithium-Sekundärbatterie nach Anspruch 10, wobei in Schritt (1) das Übergangsmetall-Ausgangsmaterial NiO ist, das Lithium-Ausgangsmaterial Li₂O, LiOH oder Li₂CO₃ ist, das Phosphor-Ausgangsmaterial (NH₄)₂HPO₄ ist, das Aluminium-Ausgangsmaterial Al(OH)₃ ist und das Bor-Ausgangsmaterial B(OH)₃ ist.

12. Verfahren zur Herstellung des Additivs für eine positive Elektrode einer Lithium-Sekundärbatterie nach Anspruch 10, wobei in Schritt (2) die Mischung 10 bis 32 Stunden lang bei 300°C bis 700°C wärmebehandelt wird.

13. Positive Elektrode einer Lithium-Sekundärbatterie, wobei die positive Elektrode folgendes umfasst:
das Additiv nach Anspruch 1; und
ein Positivelektrodenaktivmaterial,
wobei das Additiv in einer Menge von 10 Gewichtsteilen bis 40 Gewichtsteilen, bezogen auf 100 Gewichtsteile des Positivelektrodenaktivmaterials, enthalten ist.

## Revendications

1. Additif pour une électrode positive d'une batterie secondaire au lithium, l'additif comprenant :
un oxyde de métal de transition de lithium présentant une forme dopée à l'aluminium et représenté par la formule chimique 1 ci-dessous ;
Li₃PO₄ ;
Li₅AlO₄ ; et
Li₃BO₃ ;
[Formule chimique 1] Li₂Ni₁₋ₓAlₓO_{z}
dans laquelle x est compris de 0,001 à 0,005.

2. Additif pour une électrode positive d'une batterie secondaire au lithium selon la revendication 1,
dans lequel x est compris de 0,002 à 0,003.

3. Additif pour une électrode positive d'une batterie secondaire au lithium selon la revendication 1, dans lequel l'oxyde de métal de transition de lithium est inclus dans 75 % en poids à 90 % en poids sur la base d'un poids total de l'additif.

4. Additif pour une électrode positive d'une batterie secondaire au lithium selon la revendication 1, dans lequel le Li₃PO₄ est inclus dans 1 % en poids à 10 % en poids sur la base d'un poids total de l'additif.

5. Additif pour une électrode positive d'une batterie secondaire au lithium selon la revendication 1, dans lequel le Li₅AlO₄ est inclus dans 0,5 % en poids à 5 % en poids sur la base d'un poids total de l'additif.

6. Additif pour une électrode positive d'une batterie secondaire au lithium selon la revendication 1, dans lequel le Li₃BO₃ est inclus dans 0,1 % en poids à 3 % en poids sur la base d'un poids total de l'additif.

7. Additif pour une électrode positive d'une batterie secondaire au lithium selon la revendication 1, dans lequel une portion de Li₃BO₃ est présente dans un état de revêtement sur l'oxyde de métal de transition de lithium.

8. Additif pour une électrode positive d'une batterie secondaire au lithium selon la revendication 1, dans lequel l'additif inclut en outre NiO.

9. Additif pour une électrode positive d'une batterie secondaire au lithium selon la revendication 8, dans lequel le NiO est inclus dans 5 % en poids à 15 % en poids sur la base d'un poids total de l'additif.

10. Procédé destiné à préparer l'additif pour une électrode positive d'une batterie secondaire au lithium selon la revendication 1, le procédé comprenant :
(1) préparer un mélange en mélangeant un matériau source de métal de transition, un matériau source de lithium, un matériau source de phosphore, un matériau source d'aluminium et un matériau source de bore ; et
(2) traiter thermiquement le mélange.

11. Procédé de préparation de l'additif pour une électrode positive d'une batterie secondaire au lithium selon la revendication 10, dans lequel, dans l'étape (1), le matériau source de métal de transition est NiO, le matériau source de lithium est Li₂O, LiOH ou Li₂CO₃, le matériau source de phosphore est (NH₄)₂HPO₄, le matériau source d'aluminium est Al(OH)₃ et le matériau source de bore est B(OH)₃.

12. Procédé de préparation de l'additif pour une électrode positive d'une batterie secondaire au lithium selon la revendication 10, dans lequel, dans l'étape (2), le mélange est traité thermiquement pendant 10 heures à 32 heures entre 300 °C et 700 °C.

13. Électrode positive d'une batterie secondaire au lithium, l'électrode positive comprenant :
l'additif selon la revendication 1 ; et
un matériau actif d'électrode positive,
dans lequel l'additif est inclus dans 10 parties en poids à 40 parties en poids sur la base de 100 parties en poids du matériau actif d'électrode positive.
